# EUROPEAN PATENT SPECIFICATION

(11) **EP 2 075 779 B1**
(45) Date of publication and mention of the grant of the patent: **04.07.2012**
(21) Application number: 08021179.0
(22) Date of filing: 05.12.2008
(51) Int. Cl.: G08G 1/0968

(54) **Navigation system and method for guiding a user along a route.**
Navigationssystem und Verfahren zur Bereitstellung der Routenführung für einen Benutzer
Système de navigation et procédé de déliverance de guidage d'itinéraire à un utilisateur.

(30) Priority: 27.12.2007 KR 20070139276
(43) Date of publication of application: 01.07.2009
(73) Proprietor: LG Electronics Inc., Seoul 150-721 (KR)
(72) Inventor: Kim, Hyun-Seok, Suwon-si Gyeonggi-do 443-738 (KR); Lee, Kun-Sik, Seoul 139-200 (KR); Ahn, Jeong-Hee, Suwon-Si Gyeonggi-do 443-738 (KR); Yun, Jong-Min, Seoul 142-779 (KR); Shim, Jae-Hee, Seoul 156-010 (KR); Chang, Suk-Jin, Seongham-si Gyeonggi-do 463-932 (KR); Lee, Hyung-Nam, Bupyeong-gu Incheon 403-849 (KR); Jeon, Myoung-Hoon, Gyeonggi-do 412-500 (KR)
(74) Representative: Urner, Peter

(56) References cited:
- EP-A- 1 498 696
- JP-A- 2006 329 678
- US-A1- 2003 069 690
- US-A1- 2005 261 825
- US-B1- 7 076 363

## Description

### CROSS-REFERENCE TO RELATED APPLICATIONS

This application claims the benefit of earlier filing date and right of priority to Korean Application No. 10-2007-0139276, filed on December 27, 2007, the contents of which is incorporated by reference herein in its entirety.

### FIELD OF THE INVENTION

The present invention relates to navigation systems, and more particularly, to a navigation system and method for guiding a user along a route using a navigation system.

### DESCRIPTION OF THE RELATED ART

Recently, navigation systems for guiding a user along a route to a destination using global positioning system ("GPS") signals have become widely available and highly desired by consumers. Consequently, manufacturers of such navigation systems are seeking to increase the functionality and features of such navigation systems.

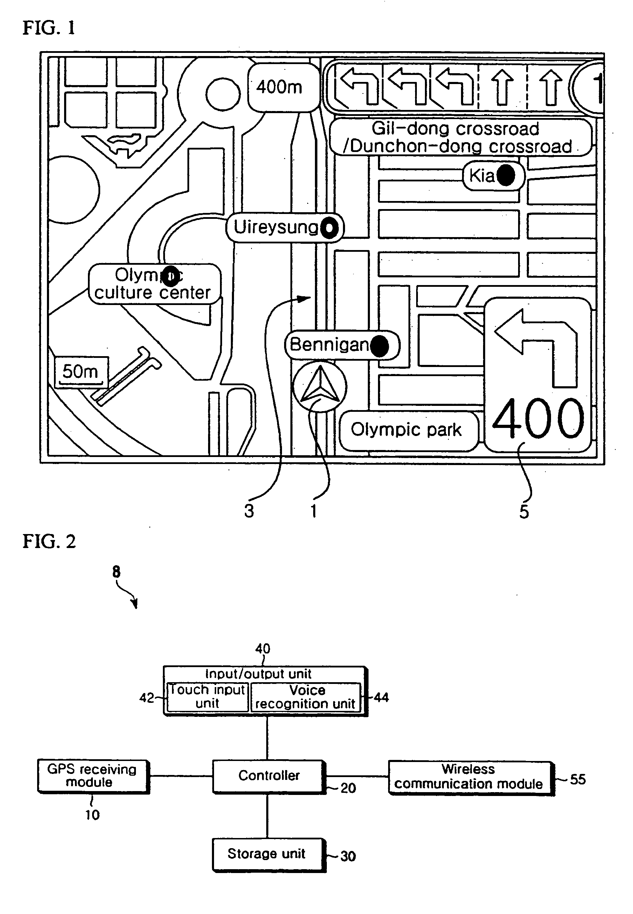

Conventional navigation systems guide a user along a route by providing the user turn-by-turn (TBT") instructions, which are sequentially followed until the destination is reached. For example, FIG. 1 shows an exemplary display of a conventional navigation system. As shown in FIG. 1, the navigation system displays the current position, such as current position 1, of the navigation system while proceeding to a destination along a route, such as route 3.

As further shown in FIG. 1, the navigation system displays a TBT instruction window, such as TBT instruction window 5, which provides the next TBT instruction to be followed by the user while traveling along the route. The next TBT instruction includes, for example, the distance to be traveled for the next TBT instruction and the direction in which to proceed. For example, the next TBT instruction in TBT instruction window 5 shown in FIG.1 instructs the user to make a left turn after proceeding 400 meters.

Often times, however, the subsequent TBT instruction following the next TBT instruction may instruct the user to proceed in a particular direction after proceeding only a short distance following the completion of the next TBT instruction. In such cases, the subsequent TBT instruction may not be displayed for an adequate period of time to properly notify the user. As a result, the user may disadvantageously not have an appropriate amount of time to react to the subsequent TBT instruction, thus being unable to properly follow the subsequent TBT instruction.

The conventional navigation system also disadvantageously requires the user to perform several steps in order to find and set a detour route that avoids all or a portion of a route to a destination. For example, a user of a conventional navigation system may be required to select a menu for viewing the various routes to a destination, select a specific route, search for a detour route, and replace the route with the detour route. Consequently, such a sequence of steps may be difficult to perform by a user of the conventional navigation system, especially when the user is operating a vehicle. As a result, a user of a conventional navigation system may experience difficulty in finding a detour route to a destination.

US 2005/0261825 A1 discloses a navigation system and a navigation method according to the preamble of claim 1 and 10, respectively. This "turn-by-turn" navigation system generates a Turn List, which displays the distance, direction, and turn-into-street names of upcoming turns in a simple, easy-to-read format. Another visual form of turn-by-turn information shows a turn icon to indicate an upcoming turn together with route data of the next or upcoming turn.

### SUMMARY OF THE INVENTION

According to the present invention the navigation system comprises a controller that is adapted for processing the position information and the map information in order to concurrently provide the map information including the position information of the navigation system, a next turn-by-turn instructions and one or more subsequent turn-by-turn instructions to the user via the display unit, wherein the next turn-by-turn instruction is displayed in a first window and the one or more subsequent turn-by-turn instructions are displayed in a second window adjacent to and above to the first window.

In particular, the next turn-by-turn instruction is displayed in a first window and the one or more subsequent turn-by-turn instructions are displayed in a second window in response to an input provided by the user.

In another embodiment of the invention, the navigation system includes a wireless communication module for receiving traffic information and the one or more subsequent turn-by-turn instructions are determined based on the traffic information.

In yet another embodiment of the invention, the one or more subsequent turn-by-turn instructions are each associated with a corresponding detour command for determining a detour route avoiding the corresponding subsequent turn-by-turn instruction and for determining one or more subsequent detour turn-by-turn instructions based on the detour route. The user may initiate the detour command by a touch input on the display. The navigation system may include a voice recognition module and the user may initiate the respective detour command via the voice recognition module.

In one aspect of the invention, the controller determines the detour route and the one or more subsequent detour turn-by-turn instructions based on the detour route. The controller may replace the route with the detour route. Preferably, the controller displays the one or more subsequent detour turn-by-turn instructions in a third window. Preferably, the controller updates the one or more subsequent turn-by-turn instructions based on the detour route.

In another aspect of the invention, the number of the one or more subsequent turn-by-turn instructions is determined based on a magnification of the display or a distance of the route. In yet another aspect of the invention, the next turn-by-turn instruction and the one or more subsequent turn-by-turn instructions each includes a location and a proceeding direction.

Further, a method for guiding a user along a route includes determining a current position of a user and concurrently providing the user with a next turn-by-turn instruction and one or more subsequent turn-by-turn instructions in list form. Preferably, the next turn-by-turn instruction is displayed in a first window, and the one or more subsequent turn-by-turn instructions are displayed in a second window in response to an input by the user.

The one or more subsequent turn-by-turn instructions are each associated with a corresponding detour command for determining a detour route avoiding the corresponding subsequent turn-by-turn instruction.

The method for guiding a user along a route also includes detecting a detour command associated with at least one of the one or more subsequent turn-by-turn instructions, determining a detour route avoiding the at least one of the subsequent turn-by-turn instructions, and replacing the route with the detour route. The method for guiding a user along a route further includes determining one or more subsequent detour turn-by-turn instructions and displaying the one or more subsequent detour turn-by-turn instructions.

The detour command is detected via a touch input or via a voice input. The number of the one or more subsequent turn-by-turn instructions may be determined depending on a magnification of a display or.a distance of the route.

Further a method for providing a next turn-by-turn instruction and one or more subsequent turn-by-turn instructions for guiding a user along a route includes detecting a turn-by-turn list command, determining the next turn-by-turn instruction and the one or more subsequent turn-by-turn instructions for the route, generating a turn-by-turn list using the one or more subsequent turn-by-turn instructions, and displaying the next turn-by-turn instruction concurrently with the turn-by-turn list.

In addition, the method may include measuring an elapsed time after displaying the next turn-by-turn direction and the turn-by-turn list, determining whether the elapsed time is greater than a predetermined value, and no longer displaying the turn-by-turn list if the elapsed time is greater than the predetermined value.

Further the method may include detecting a touch input and no longer displaying the turn-by-turn list upon detecting the touch input.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention. Features, elements, and aspects of the invention that are referenced by the same numerals in different figures represent the same, equivalent, or similar features, elements, or aspects in accordance with one or more embodiments.

FIG. 1 shows an exemplary display of a conventional navigation system.

FIG. 2 is a block diagram of an exemplary navigation system according to one embodiment of the present invention.

FIG. 3 shows a flowchart of a method for providing a next turn-by-turn instruction concurrently with one or more subsequent turn-by-turn instructions according to one embodiment of the present invention.

FIG. 4 shows a flowchart of a method for providing a next turn-by-turn instruction concurrently with one or more subsequent turn-by-turn instructions according to another embodiment of the present invention.

FIG. 5 shows a flowchart of a method for providing a next turn-by-turn instruction concurrently with one or more subsequent turn-by-turn instructions according to a further embodiment of the present invention.

FIG. 6A is an exemplary display of the navigation system of the present invention showing an exemplary first window according to one embodiment of the present invention.

FIG. 6B is an exemplary display of the navigation system of the present invention after a touch input on an exemplary first window has been provided by a user according to one embodiment of the present invention.

FIG. 6C is an exemplary display of the navigation system of the present invention showing an exemplary turn-by-turn list according to one embodiment of the present invention.

FIG. 6D is an exemplary display of the navigation system of the present invention showing an exemplary detour turn-by-turn list according to one embodiment of the present invention.

FIG. 6E is an exemplary display of the navigation system of the present invention showing an exemplary detour turn-by-turn list according to one embodiment of the present invention.

FIG. 6F is an exemplary display of the navigation system of the present invention showing an exemplary detour route that has replaced a set route of the navigation system according to one embodiment of the present invention

### DETAILED DESCRIPTION OF THE PREFERRED EMBODIMENTS

The present invention relates to a navigation system and method for providing a next turn-by-turn instruction concurrently with one or more subsequent turn-by-turn instructions.

Reference will now be made in detail to the preferred embodiments of the present invention, examples of which are illustrated in the accompanying drawings.

FIG. 2 is a block diagram showing a navigation system 8 according to one embodiment of the present invention. As shown in FIG. 2, the navigation system 8 includes a global positioning system ("GPS") receiving module 10, controller 20, storage unit 30, input/output unit 40, and a wireless communication module 55.

The GPS receiving module 10 includes an antenna for receiving navigation satellite signals (hereinafter referred to as "GPS signals"), a memory, a GPS chip, a GRF chip, filters, and a control chip. GPS receiving modules are known in the art and thus, the configuration of the GPS receiving module 10 will not be described in detail herein. The GPS receiving module 10 receives GPS signals and calculates position information of navigation system 8 based on the GPS signals. In one embodiment, the GPS receiving module 10 receives the GPS signals at regular intervals and updates the abovementioned position information.

The controller 20 is coupled to the GPS receiving module 10 and is configured to receive and process the position information calculated by the GPS receiving module 10, and to control the operation of the GPS receiving module 10. The controller 20 determines tum-by turn ("TBT") instructions for guiding a user along a route to a destination and provides the TBT instructions to the user. In one embodiment of the invention, the TBT instructions include a next turn-by-turn instruction and one or more subsequent TBT instructions. In such an embodiment, the controller 20 can be configured to display the next TBT instruction and one or more subsequent TBT instructions concurrently, where the subsequent TBT instructions are displayed in the form of a list (hereinafter "TBT list").

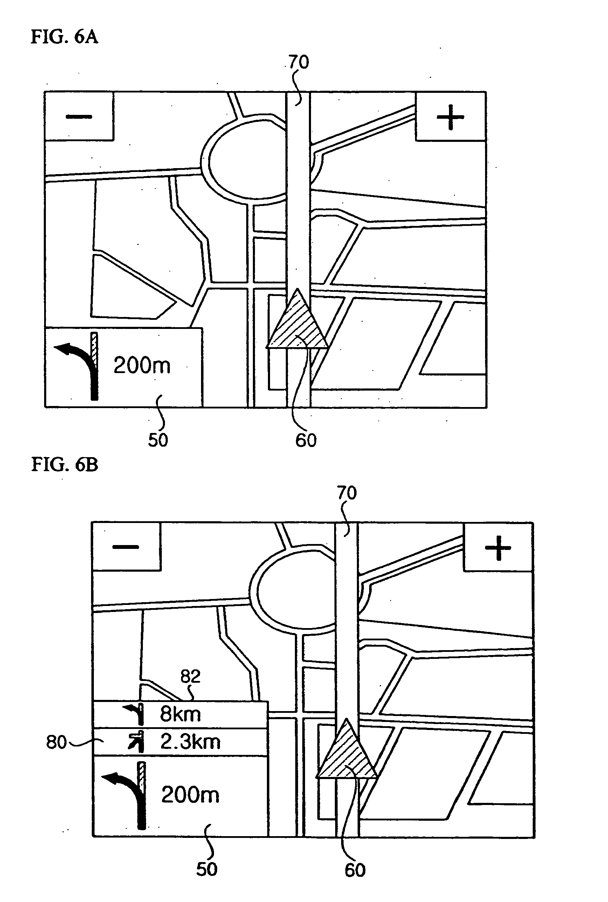

The controller 20 can display a TBT list, such as the TBT list 80 shown in FIG. 6B, in response to a user request. For example, and as discussed below, the user request can be made by a touch input or a voice input of the user.

As shown in FIG. 6B, the TBT list 80 includes one or more subsequent TBT instructions that are sequentially arranged based on the distances from the current position to the position where each subsequent TBT instruction is performed. In one embodiment, the controller 20 detects the movement of the navigation system 8 and updates the TBT list 80 according to the position of the navigation system 8.

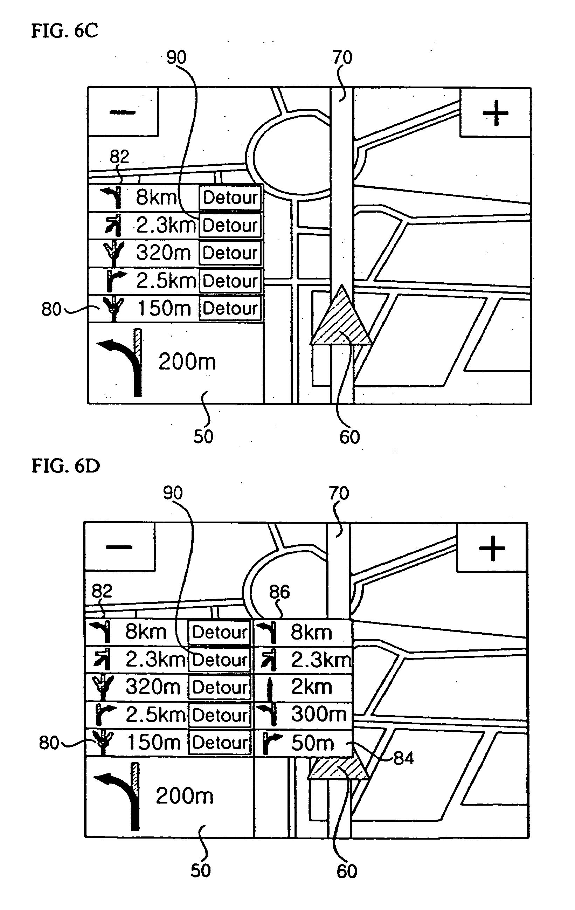

In one embodiment of the present invention, the subsequent TBT instructions in the TBT list 80 are each associated with a corresponding detour menu, such as the detour menu 90 shown in FIGS. 6C to 6F, for initiating a detour command. For example, the detour command can be initiated by a user's touch input on a detour menu. If the controller 20 detects a detour command for a corresponding subsequent TBT instruction, the controller 20 determines a detour route that avoids the corresponding subsequent TBT instruction. The controller 20 then replaces the route with the detour route, updates the TBT list 80, and displays the TBT list 80.

The storage unit 30 for storing map information is coupled to the controller 20. The map information is used for displaying the position information calculated by the GPS receiving module on a map. The map information includes information on TBT instructions.

The input/output unit 40 is coupled to the controller 20. In one embodiment, the input/output unit 40 includes a touch input unit 42. In another embodiment, the input/output unit 40 includes a voice recognition unit 44. In yet another embodiment, the input/output unit 40 includes both a touch input unit 42 and a voice recognition unit 44. For example, the input/output unit 40 may be configured as a touch display, which is also known in the art as a "touch screen" apparatus.

The input/output unit 40 can be configured to display TBT instructions determined by the controller 20 and to receive commands input by a user. In the embodiment where the input/output unit 40 includes the touch input unit 42, a user may input a command by touching the screen.

In the embodiment where the input/output unit 40 includes the voice recognition unit 44, the controller 20 receives a voice signal of the user and executes a command corresponding to the voice signal. For example, the controller 20 can be configured to generate and display the TBT list 80 in response to a voice input. For example, a user may say the word "list" or say the letters "T B-T° to display the TBT list 80. The controller 20 can be further configured to no longer display the TBT list 80 in response to a voice input. For example, a user may say the word "chose" to no longer display the TBT list 80.

The controller 20 can be configured to enter a detour selection mode. The detour selection mode facilitates selection of a detour route in response to a voice input.

For example, the user may say the word "detour" to enter a detour selection mode and may select a corresponding subsequent TBT instruction by saying the word "next" or "back." Furthermore, the user may initiate a detour command using a voice signal. For example, the user may initiate a detour command by saying the word "Okay."

The wireless communication module 55 for receiving traffic information is coupled to the controller 20. The wireless communication module 55 can be, for example, a digital multimedia broadcasting ("DMB") receiver module configured to receive transport protocol expert group ("TPEG") information through DMB broadcast signals.

Hereinafter, the operation of the present invention will be described in detail according to a method for providing a next TBT instruction concurrently with one or more subsequent TBT instructions to a user of a navigation system, with reference to the accompanying drawings.

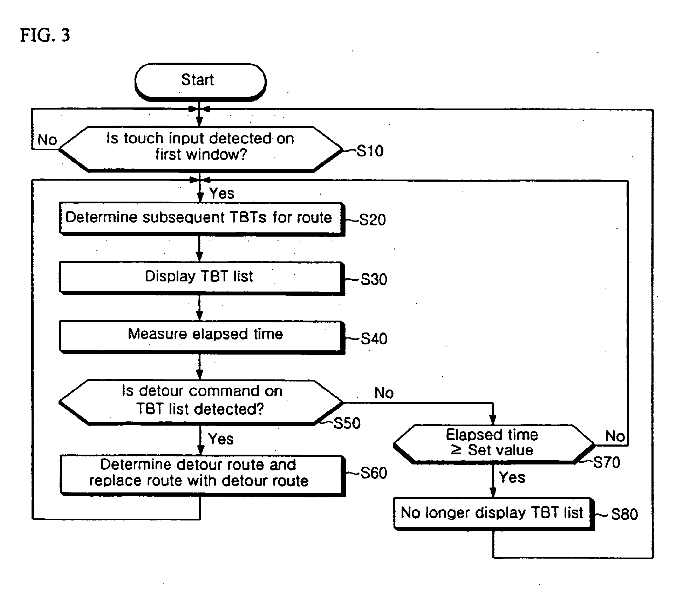

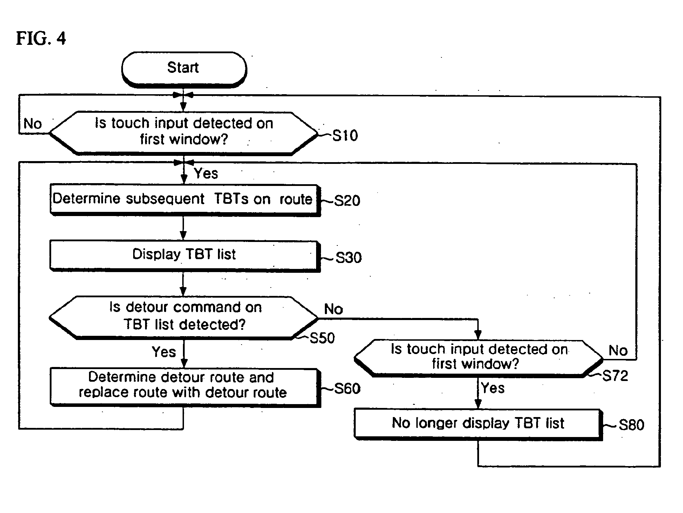

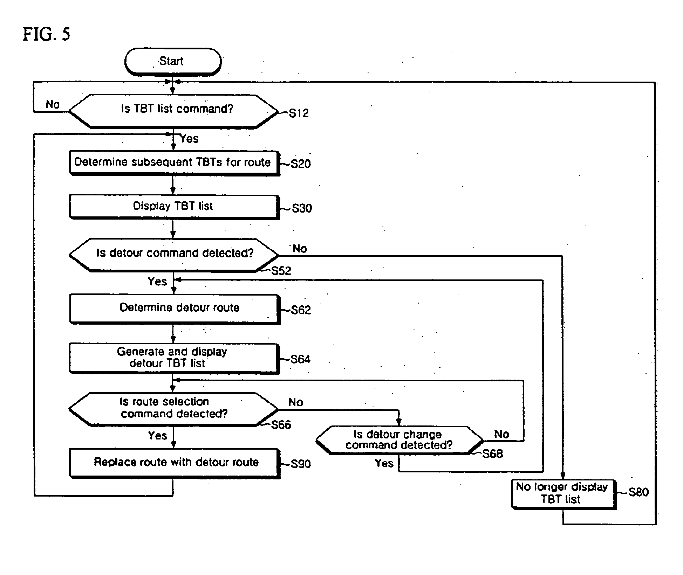

FIG. 3 shows a flowchart of a method for providing a next TBT instruction concurrently with one or more subsequent TBT instructions according to one embodiment of the present invention. FIG. 4 is a flowchart of a method for providing a next TBT instruction concurrently with one or more subsequent TBT instructions according to another embodiment of the present invention. FIG. 5 is a flowchart of a method for providing a next TBT instruction concurrently with one or more subsequent TBT instructions according to a further embodiment of the present invention.

As shown in FIG. 3, the method for providing a next TBT instruction concurrently with one or more subsequent TBT instructions according to one embodiment of the present invention begins at an initial state when a first window 50 on the display of navigation system 8 is displayed, as illustrated in FIG. 6A. The first window 50 includes the next TBT instruction to be followed by the user while traveling along a route, where the next TBT instruction is shown in the first window 50 after a user has set a route in the navigation system 8.

With reference to FIGS. 6A to 6D, the method for providing a next TBT instruction concurrently with one or more subsequent TBT instructions according to one embodiment of the present invention begins by detecting whether a user has provided a touch input on the first window 50 (S10). A touch input on the first window 50 is a command for displaying the TBT list 80 shown in FIG. 6B. Although the invention is disclosed with respect to a touch input, it should be understood that in other embodiments, the user may provide a voice input instead of the touch input to initiate the commands described herein.

If the touch input provided by the user is detected on the first window 50, the controller 20 determines TBT instructions for a route (S20). The controller 20 also determines the directions and distances from the current position 60 to the positions where the TBT instructions should be performed. The controller then determines a predetermined number of subsequent TBT instructions to display.

Thereafter, the TBT list 80 is generated using the number of subsequent TBT instructions and the controller 20 then displays the TBT list 80 (S30). It can be appreciated that the number of subsequent TBT instructions to be displayed in the TBT list 80 may be determined using various methods.

For example, if a display magnification of a current route search window is determined to be high, then a TBT list having a relatively small number of subsequent TBT instructions is generated. However, if the display magnification is determined to be low, a TBT list having a relatively large number of subsequent TBT instructions is generated.

As another example, depending on a distance of a set route, a TBT list having a relatively large number of subsequent TBT instructions is created if the distance is long. On the other hand, a TBT list having a relatively small number of subsequent TBT instructions is generated if the distance is short.

In one embodiment, the TBT list 80 may be generated based on traffic information. For example, the TBT list 80 may be determined depending on traffic information received through the wireless communication module 55. In one embodiment, the TBT list 80 may be displayed with a different background color, character color, and/or contrast to appropriately reflect various traffic conditions.

After the controller 20 displays the TBT list 80, the TBT list 80 is automatically no longer displayed after a certain period of time has elapsed. For example, after the controller 20 displays the TBT list 80, the controller 20 measures an elapsed time from the moment when the TBT list 80 was displayed (S40).

Then, the controller 20 determines whether a detour menu, such as the detour menu 90 shown in FIG. 6C, on the TBT list 80 is selected (S50). If the user selects a detour menu associated with a subsequent TBT instruction in the TBT list 80, a detour command is initiated and the controller 20 determines a detour route that avoids the associated subsequent TBT instruction. In other words, the detour route does not pass through the proceeding direction of the subsequent TBT instruction corresponding to the selected detour menu. The controller 20 then replaces the route with the detour route (S60).

If no detour menu is selected, the controller 20 determines whether the elapsed time is greater than a predetermined value (S70). If the elapsed time is greater than the predetermined value, the controller 20 no longer displays the TBT list 80 (S80) and the process returns to the initial state.

If the elapsed time is less than the predetermined value, the process again determines TBT instructions for the route (S20). Accordingly, since subsequent TBT instructions are generated again based on the current position 60 of the navigation system, the TBT list 80 is advantageously updated and thereby reflects any change in position of the navigation system.

FIG. 4 illustrates a method for providing a next TBT instruction concurrently with one or more subsequent TBT instructions according to another embodiment of the present invention. Steps S10 to S30, S50, and 560 in FIG. 4 correspond to steps S10 to S30, S50, and S60 in FIG. 3, respectively.

As shown in FIG. 4, if a detour menu, such as detour menu 90 illustrated in FIG. 6C, is not selected (S50) for a corresponding subsequent TBT instruction on the TBT list 80, it is determined whether a touch input is detected on the first window 50 (S72). If a user provides a touch input on the first window 50 that is recognized as a command causing the controller 20 to no longer display the TBT list 80, the process returns to the initial state of the present invention (S80). If a touch input is not detected on the first window 50, the process again determines TBT instructions for the route (S20).

FIG. 5 illustrates a method for providing a next TBT instruction concurrently with one or more subsequent TBT instructions according to yet another embodiment of the present invention. As shown in FIG. 5, if the controller 20 detects a TBT list command (S12), the controller 20 determines the TBT instructions for a route and displays a TBT list in the same manner as steps S20 and S30 in the method shown in FIG. 3.

If a detour command is not detected (S52) by the controller 20, then the controller 20 no longer displays the TBT list 80 (S80) and waits for the TBT list command (S12). It should be understood that the TBT list 80 may be no longer displayed after a certain time delay. However, if a detour command provided by the user is detected (S52) by the controller 20, then controller 20 determines a detour route that avoids the subsequent TBT instruction corresponding to the detour command (S62).

Thereafter, the controller 20 determines one or more subsequent detour TBT instructions based on the detour route, generates a detour TBT list 84 using the subsequent detour TBT instructions, and displays the detour TBT list 84 in a third window 86 concurrently with the next TBT instruction and the TBT list 80 (S64).

After displaying the detour TBT list 84, the controller 20 detects whether a route selection command for replacing a route with a detour route is provided by the user (S66). If the route selection command is not provided, the controller 20 determines whether a detour change command for changing a detour position is provided (S68). For example, the detour change command may be initiated by providing a detour command for a different subsequent TBT instruction on the TBT list 80. If a detour change command is detected by the controller 20, the process again determines a detour route that avoids the corresponding subsequent TBT instruction (S62).

However, if a route selection command is detected (S66), the controller 20 replaces the route with the selected detour route (S90) and the process again determines subsequent TBTs for the route (S20). It should be understood that a time delay may be applied between the abovementioned steps.

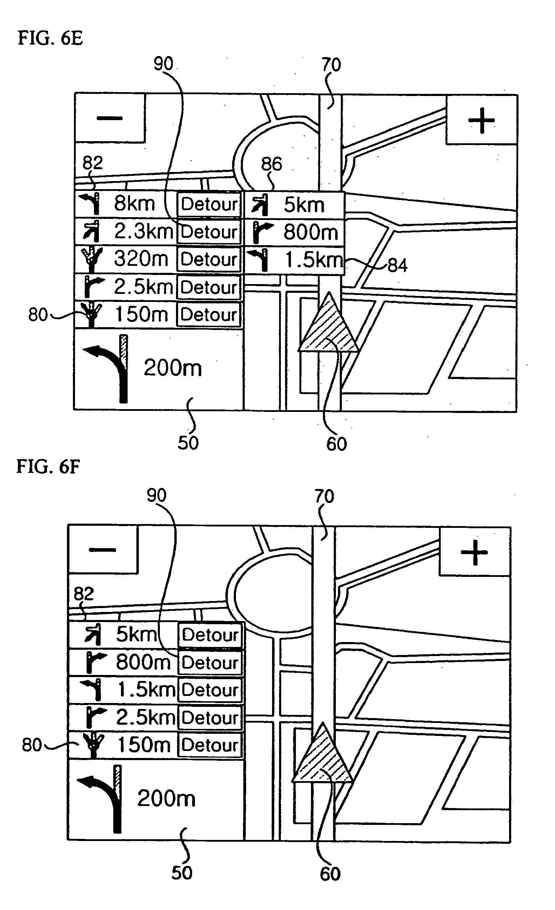

FIG. 6A is an exemplary display of the navigation system of the present invention showing the first window 50; FIG. 6B is an exemplary display of the navigation system of the present invention showing the TBT list 80 after a touch input on the first window 50 has been provided by a user; FIG. 6C is an exemplary display of the navigation system of the present invention showing the detour menu 90; FIG. 6D is an exemplary display of the navigation system of the present invention showing the detour TBT list 84 of a detour route determined after the user selects a detour menu 90 in FIG. 6C; FIG. 6E is an exemplary display of the navigation system of the present invention showing the detour TBT list 84 of a new detour route after a detour change command is provided by the user; and FIG. 6F is an exemplary display of the navigation system of the present invention showing a detour route that has replaced a set route of the navigation system, after the user has selected the detour route.

As shown in FIG. 6A, the navigation system 8 is moving along a set route 70, where the position of the navigation system 8 is shown as the symbol 60. As further shown in FIG. 6A, the first window 50 for displaying a distance to the next TBT instruction and a direction to turn at the next TBT instruction on the route 70 is displayed at the lower left corner of the display.

As shown in FIG. 6B, if the user touches the first window 50, the TBT list 80 is displayed in a second window 82 above the first window 50.

As shown in FIG. 6C, the TBT list 80 including a predetermined number of subsequent TBT instructions is displayed in the second window 82 above the first window 50. Although the TBT list 80 in the exemplary display shown in FIG. 6C includes five subsequent TBT instructions, the TBT list 80 in other embodiments of the invention can include a different number of subsequent TBT instructions. As further shown in FIG. 6C, each subsequent TBT instruction included in the TBT list 80 is associated with a corresponding detour menu 90. Each detour menu 90 allows the user to reset a route, such as by determining a detour route, which avoids the proceeding direction of the subsequent TBT instruction selected by the user.

Referring to FIG. 6C, it can be understood from the first window 50 and the TBT list 80 that the next TBT instruction for the set route 70 instructs the user to turn left after proceeding 200 meters, followed by the first subsequent TBT instruction to proceed along a rotary in the direction of 11 o'clock after proceeding 150 meters, followed by the second subsequent TBT instruction to turn right after proceeding 2.5 kilometers, followed by the third subsequent TBT instruction to proceed along a rotary in the direction of 2 o'clock after proceeding 320 meters, followed by the fourth subsequent TBT instruction to make a U-tum after proceeding 2.3 kilometers, and lastly followed by the fifth subsequent TBT instruction to turn left after proceeding 8 kilometers.

For example, referring to now to FIG. 6D, if the user selects a detour menu 90 on the TBT list 80 associated with the first subsequent TBT instruction to proceed in the direction of 11 o'clock after proceeding 150 meters, a detour command is initiated for the first subsequent TBT instruction. Thereafter, as shown in FIG. 6D, a detour route that avoids the first subsequent TBT instruction is determined. In addition, a detour TBT first 84 is generated based on the detour route, which is then displayed in a third window 86, situated on the right side of the TBT list 80 displaying the current route.

As shown in FIG. 6D, the fourth and fifth subsequent TBT instructions in TBT list 80 are respectively the same TBT instructions as the fourth and fifth subsequent detour TBT instructions in the detour TBT list 84. As such, the fourth and fifth subsequent TBT instructions can be displayed in the same type of contrast as the fourth and fifth subsequent detour TBT instructions, so as to notify the user that the twos routes, specifically the set route and the detour route, merge at the abovementioned subsequent TBT instructions when the user selects a detour.

If after viewing the detour TBT list 84 of the detour route, the user determines that the detour route is inappropriate, the user may select a new detour position. For example, referring now to FIG. 6E, if the user selects the third subsequent TBT instruction in the TBT list 80, specifically proceed in the direction of 2 o'clock after proceeding 320 meters, as a new detour TBT position, the navigation system 8 determines a new detour route that avoids the third subsequent TBT instruction. In other words, the navigation system 8 determines a new detour route that does not instruct the user to proceed in the direction of 2 o'clock at the rotary after proceeding 320 meters following the second subsequent TBT instruction. Thereafter, the navigation system 8 determines subsequent detour TBT instructions for the new detour route and displays a detour TBT list 84 using the subsequent detour TBT instructions in the third window 86.

Referring now to FIG. 6F, if the user provides a route selection command, the route of the navigation system 8 is replaced by the detour route. As shown in FIG. 6F, the TBT list 80 is displayed and also updated to include the subsequent detour TBT instructions determined for the detour route. Accordingly, as shown in FIG. 6F, the updated TBT list 80 includes different third, fourth, and fifth subsequent TBT instructions than the third, fourth, and fifth subsequent TBT instructions in the TBT list 80 in FIG. 6E.

More specifically, as shown in FIG. 6F, the navigation system 8 instructs the user to proceed using the same first and second subsequent TBT instructions as in the previous route shown in FIG. 6E. However, the user is then instructed to turn left after proceeding 1.5 kilometers following the second subsequent TBT instruction, to turn right after proceeding 800 meters, and to finally make a U-turn after proceeding 5 kilometers.

In one embodiment of the present invention, after the updated TBT list 80 in FIG. 6F is displayed for a predetermined period of time, the updated TBT list 80 may no longer be displayed if a user does not provide any input.

It should be understood that the invention can be practiced with modification and alteration within the scope of the appended claims. The description is not intended to be exhaustive or to limit the invention to the precise form disclosed. These and various other adaptations and combinations of the embodiments disclosed are within the scope of the invention and are further defined by the claims and their full scope of equivalents.

As the present invention may be embodied in several forms without departing from the essential characteristics thereof, it should also be understood that the above-described embodiments are not limited by any of the details of the foregoing description, unless otherwise specified, but rather should be construed broadly within its scope as defined in the appended claims. Therefore, all changes and modifications that fall within the metes and bounds of the claims, or equivalence of such metes and bounds are intended to be embraced by the appended claims.

The foregoing embodiments and advantages are merely exemplary and are not to be construed as limiting the present invention. The present teaching can be readily applied to other types of apparatuses.

The description of the present invention is intended to be illustrative, and not to limit the scope of the claims. Many alternatives, modifications, and variations will be apparent to those skilled in the art. In the claims, means-plus-function clauses are intended to cover the structure described herein as performing the recited function and not only structural equivalents but also equivalent structures.

## Claims

1. A navigation system (8) comprising:
- a global positioning system (GPS) receiving module (10) for determining position information of the navigation system (8);
- a display unit (40) for displaying information to guide a user along a route; and
- a storage unit (30) for storing map information;
**characterized by**
- a controller (20) for processing the position information and the map information in order to concurrently provide the map information including the position information of the navigation system (8), a next turn-by-turn instruction and one or more subsequent turn-by-turn instructions to the user via the display unit (40); wherein the next turn-by-turn instruction is displayed in a first window (50) and the one or more subsequent turn-by-turn instructions are displayed in a second window (82) adjacent to and above the first window.

2. The navigation system of claim 1, wherein the controller (20) updates the first window (50) and the second window (82) according to any change in position of the navigation system (8).

3. The navigation system (8) of claim 1, further comprising a wireless communication module (55) for receiving traffic information, wherein the one or more subsequent turn-by-turn instructions are determined based on the traffic information.

4. The navigation system (8) of claim 1, wherein the one or more subsequent turn-by-turn instructions are each associated with a corresponding detour command for determining a detour route avoiding the corresponding subsequent turn-by-turn instruction and for determining one or more subsequent detour turn-by-turn instructions based on the detour route.

5. The navigation system of claim 4, wherein the detour command is initiated by the user, and wherein the controller (20) determines the detour route and the one or more subsequent detour turn-by-turn instructions based on the detour route.

6. The navigation system (8) of claim 5, wherein the controller (20) replaces the route with the detour route.

7. The navigation system (8) of claim 5, wherein the controller (20) displays the one or more subsequent detour turn-by-turn instructions in a third window (86).

8. The navigation system (8) of claim 1, wherein a number of the one or more subsequent turn-by-turn instructions is determined based on a magnification of the display or a distance of the route.

9. The navigation system (8) of claim 1, wherein the next turn-by-turn instruction and the one or more subsequent turn-by-turn instructions each comprises a location and a proceeding direction.

10. A method for guiding a user along a route using a navigation system (8), the method comprising:
- detecting a turn-by-turn list command (S 10);
- determining a next turn-by-turn instruction and one or more subsequent turn-by-turn instructions for the route (S20); and
- generating a turn-by-turn list (80) using the one or more subsequent turn-by-turn instructions;
**characterized by**
- displaying the map information including the position information of the navigation system and the next turn-by-turn instruction concurrently with the turn-by-turn list (80);
wherein the next turn-by-turn instruction is displayed in a first window (50) and the the turn-by-turn list (80) is displayed in a second window (82) adjacent to and above the first window.

11. The method of claim 10, further comprising:
measuring an elapsed time (S40) after displaying the next turn-by-turn instruction and the turn-by-turn list (80);
- determining whether the elapsed time is greater than a predetermined value (S70); and
- no longer displaying the turn-by-turn list (80) if the elapsed time is greater than the predetermined value (S80).

12. The method of claim 10, further comprising:
detecting a touch input (S72); and
no longer displaying the turn-by-turn list (80) upon detecting the touch input (S80).

13. The method of claim 10, further comprising:
- detecting a detour command (S52) associated with at least one of the one or more subsequent turn-by-turn instructions;
- determining a detour route (S62) avoiding the at least one subsequent turn-by-turn instruction;
- generating one or more subsequent detour turn-by-turn instructions (S64); and
- replacing the displayed one or more subsequent turn-by-turn instructions with the one or more subsequent detour turn-by-turn instructions (S90).

14. The method of claim 13, further comprising:
- measuring an elapsed time after displaying the next turn-by-turn instruction and the one or more subsequent detour turn-by-turn instructions;
- determining whether the elapsed time is greater than a predetermined value; and
- no longer displaying the one or more subsequent detour turn-by-turn instructions if the elapsed time is greater than the predetermined value.

15. The method of claim 13, further comprising:
- detecting a touch input; and
- no longer displaying the one or more subsequent detour turn-by-turn instructions upon detecting the touch input.

## Patentansprüche

1. Navigationssystem (8), das umfasst:
- ein "Global Positioning System"-Empfangsmodul (GPS-Empfangsmodul) (10) zum Bestimmen der Positionsinformationen des Navigationssystems (8);
- eine Anzeigeeinheit (40) zum Anzeigen der Informationen, um den Anwender entlang einer Route zu führen; und
- eine Speichereinheit (30), um Landkarteninformationen zu speichern;
**gekennzeichnet durch**
- eine Steuereinheit (20) zum Verarbeiten der Positionsinformationen und der Landkarteninformationen, um dem Anwender über die Anzeigeeinheit (40) gleichzeitig die Landkarteninformationen einschließlich der Positionsinformationen des Navigationssystems (8), eine nächste Turn-by-turn-Anweisung und eine oder mehrere nachfolgende Turn-by-turn-Anweisungen zur Verfügung zu stellen;
wobei die nächste Turn-by-turn-Anweisung in einem ersten Fenster (50) angezeigt wird und die eine oder mehrere nachfolgenden Turn-by-turn-Anweisungen in einem zweiten Fenster (82), das sich in der Nähe und oberhalb des ersten Fensters befindet, angezeigt werden.

2. Navigationssystem nach Anspruch 1, wobei die Steuereinheit (20) das erste Fenster (50) und das zweite Fenster (82) entsprechend jeder Änderung der Position des Navigationssystems (8) aktualisiert.

3. Navigationssystem (8) nach Anspruch 1, das ferner ein drahtloses Kommunikationsmodul (55) zum Empfangen von Verkehrsinformationen umfasst, wobei die eine oder mehreren nachfolgenden Turn-by-turn-Anweisungen auf der Grundlage der Verkehrsinformationen bestimmt werden.

4. Navigationssystem (8) nach Anspruch 1, wobei jede der einen oder mehreren nachfolgenden Turn-by-turn-Anweisungen mit einem entsprechenden Umleitungsbefehl verbunden ist, um eine Umleitungsroute zu bestimmen, die die entsprechende nachfolgende Turn-by-turn-Anweisung vermeidet, und um eine oder mehrere nachfolgende Umleitungs-Turn-by-turn-Anweisungen auf der Grundlage der Umleitungsroute zu bestimmen.

5. Navigationssystem nach Anspruch 4, wobei der Umleitungsbefehl durch den Anwender initiiert wird und wobei die Steuereinheit (20) die Umleitungsroute und die eine oder die mehreren nachfolgenden Umleitungs-Turn-by-turn-Anweisungen auf der Grundlage der Umleitungsroute bestimmt.

6. Navigationssystem (8) nach Anspruch 5, wobei die Steuereinheit (20) die Route durch die Umleitungsroute ersetzt.

7. Navigationssystem (8) nach Anspruch 5, wobei die Steuereinheit (20) die eine oder die mehreren nachfolgenden Umleitungs-Turn-by-turn-Anweisungen in einem dritten Fenster (86) anzeigt.

8. Navigationssystem (8) nach Anspruch 1, wobei eine Anzahl der einen oder der mehreren nachfolgenden Umleitungs-Turn-by-turn-Anweisungen auf der Grundlage einer Vergrößerung der Anzeige oder einer Entfernung der Route bestimmt wird.

9. Navigationssystem (8) nach Anspruch 1, wobei die nächste Turn-by-turn-Anweisung und die eine oder die mehreren nachfolgenden Turn-by-turn-Anweisungen jeweils einen Ort und eine weitergehende Fahrtrichtung umfassen.

10. Verfahren zum Führen eines Anwenders entlang einer Route unter Verwendung eines Navigationssystems (8), wobei das Verfahren Folgendes umfasst:
- Detektieren eines Turn-by-turn-Listenbefehls (S 10);
- Bestimmen einer nächsten Turn-by-turn-Anweisung und einer oder mehrerer nachfolgender Turn-by-turn-Anweisungen für die Route (S20); und
- Erzeugen einer Turn-by-turn-Liste (80) unter Verwendung der einen oder mehreren nachfolgenden Turn-by-turn-Anweisungen;
**gekennzeichnet durch**
- Anzeigen der Landkarteninformationen einschließlich der Positionsinformationen des Navigationssystems und der nächsten Turn-by-turn-Anweisung zusammen mit der Turn-by-turn-Liste (80);
wobei die nächste Turn-by-turn-Anweisung in einem ersten Fenster (50) angezeigt wird und die Turn-by-turn-Liste (80) in einem zweiten Fenster (82), das sich in der Nähe und oberhalb des ersten Fensters befindet, angezeigt wird.

11. Verfahren nach Anspruch 10, das ferner umfasst:
Messen der verstrichenen Zeit (S40) nach dem Anzeigen der nächsten Turn-by-turn-Anweisung und der Turn-by-turn-Liste (80);
- Bestimmen, ob die verstrichene Zeit größer ist als ein vorgegebener Wert (S70); und
- kein weiteres Anzeigen der Turn-by-turn-Liste (80), wenn die verstrichene Zeit größer ist als ein vorgegebener Wert (S80).

12. Verfahren nach Anspruch 10, das ferner Folgendes umfasst:
Detektieren einer Eingabe durch Berühren (S72); und
kein weiteres Anzeigen der Turn-by-turn-Liste (80) nach dem Detektieren einer Eingabe durch Berühren (S80).

13. Verfahren nach Anspruch 10, das ferner umfasst:
- Detektieren eines Umleitungsbefehls (S52), der mit wenigstens einer der einen oder der mehreren nachfolgenden Turn-by-turn-Anweisungen verbunden ist;
- Bestimmen einer Umleitungsroute (S62), die die wenigstens eine nachfolgende Turn-by-turn-Anweisung vermeidet;
- Erzeugen einer oder mehrerer nachfolgender Umleitungs-Turn-by-turn-Anweisungen (S64); und
- Ersetzen der angezeigten einen oder mehreren nachfolgenden Turn-by-turn-Anweisungen durch die eine oder die mehreren nachfolgenden Umleitungs-Turn-by-turn-Anweisungen (S90).

14. Verfahren nach Anspruch 13, das ferner umfasst:
- Messen der verstrichenen Zeit nach dem Anzeigen der nächsten Turn-by-turn-Anweisung und der einen oder der mehreren nachfolgenden Umleitungs-Turn-by-turn-Anweisungen;
- Bestimmen, ob die verstrichene Zeit größer ist als ein vorgegebener Wert; und
- kein weiteres Anzeigen der einen oder der mehreren nachfolgenden Umleitungs-Turn-by-turn-Anweisungen, wenn die verstrichene Zeit größer ist als ein vorgegebener Wert.

15. Verfahren nach Anspruch 13, das ferner umfasst:
- Detektieren einer Eingabe durch Berühren; und
- kein weiteres Anzeigen der einen oder mehreren nachfolgenden Umleitungs-Turn-by-turn-Anweisungen nach dem Detektieren der Eingabe durch Berühren.

## Revendications

1. Système de navigation (8) comprenant :
- un module de réception (10) d'un système de positionnement global (GPS) pour déterminer des informations de position du système de navigation (8) ;
- une unité d'affichage (40) pour afficher des informations et guider un utilisateur le long d'un itinéraire ; et
- une unité de stockage (30) pour stocker des informations de cartographie ;
**caractérisé par**
- un contrôleur (20) pour traiter des informations de position et des informations de cartographie afin de fournir simultanément les informations de cartographie incluant les informations de position du système de navigation (8), une instruction suivante de changement de direction et une ou plusieurs instructions ultérieures de changement de direction à l'utilisateur via l'unité d'affichage (40), dans lequel l'instruction suivante de changement de direction est affichée dans une première fenêtre (50) et lesdites une ou plusieurs instructions ultérieures de changement de direction sont affichées dans une seconde fenêtre (82) adjacente et au-dessus de la première fenêtre.

2. Système de navigation selon la revendication 1, dans lequel le contrôleur (20) met à jour la première fenêtre (50) et la seconde fenêtre (82) en accord avec tout changement de position du système de navigation (8).

3. Système de navigation (8) selon la revendication 1, comprenant en outre un module de communication sans fil (55) pour recevoir des informations de trafic, dans lequel lesdites une ou plusieurs instructions ultérieures de changement de direction sont déterminées en se basant sur les informations de trafic.

4. Système de navigation (8) selon la revendication 1, dans lequel lesdites une ou plusieurs instructions ultérieures de changement de direction sont associées chacune à un ordre de détour correspondant pour déterminer un itinéraire de détour évitant l'instruction ultérieure correspondante de changement de direction et pour déterminer une ou plusieurs instructions ultérieures de changement de direction de détour en se basant sur l'itinéraire de détour.

5. Système de navigation selon la revendication 4, dans lequel l'ordre de détour est initialisé par l'utilisateur, et dans lequel le contrôleur (20) détermine itinéraire de détour et lesdites une ou plusieurs instructions ultérieures de changement de direction de détour en se basant sur l'itinéraire de détour.

6. Système de navigation (8) selon la revendication 5, dans lequel le contrôleur (20) remplace l'itinéraire par l'itinéraire de détour.

7. Système de navigation (8) selon la revendication 5, dans lequel le contrôleur (20) affiche lesdites une ou plusieurs instructions ultérieures de changement de direction de détour dans une troisième fenêtre (86).

8. Système de navigation (8) selon la revendication 1, dans lequel un certain nombre desdites une ou plusieurs instructions ultérieures de changement de direction sont déterminées en se basant sur un agrandissement de l'affichage ou une distance de l'itinéraire.

9. Système de navigation (8) selon la revendication 1, dans lequel l'instruction suivante de changement de directions et lesdites une ou plusieurs instructions ultérieures de changement de direction comprennent chacune un emplacement et une direction de progression.

10. Procédé pour guider un utilisateur le long d'un itinéraire en utilisant un système de navigation (8), le procédé comprenant les étapes consistant à :
- détecter un ordre de liste de changements de direction (S10) ;
- déterminez une instruction suivante de changement de direction et une ou plusieurs instructions ultérieures de changement de direction pour l'itinéraire (S20) ; et
- générer une liste de changements de direction (80) en utilisant lesdites une ou plusieurs instructions ultérieures de changement de direction ;
**caractérisé par**
- l'étape consistant à afficher les informations de cartographie incluant les informations de position du système de navigation et l'instruction suivante de changement de direction simultanément avec la liste de changements de direction (80) ;
dans lequel l'instruction suivant de changement de direction est affichée dans une première fenêtre (50) et la liste de changements de direction (80) est affichée dans une seconde fenêtre (82) adjacente et au-dessus de la première fenêtre.

11. Procédé selon la revendication 10, comprenant en outre les étapes consistant à :
- mesurer un temps écoulé (S40) après l'affichage de l'instruction suivante de changement de direction et la liste de changements de direction (80) ;
- déterminer si le temps écoulé est supérieur à une valeur prédéterminée (S70) ; et
- ne plus afficher la liste de changements de direction (80) si le temps écoulé est supérieur à la valeur prédéterminée (S80).

12. Procédé selon la revendication 10, comprenant en outre les étapes consistant à :
- détecter une entrée tactile (S72) ; et
- ne plus afficher la liste de changements de direction (80) lors de la détection de l'entrée tactile (S80).

13. Procédé selon la revendication 10, comprenant en outre les étapes consistant à :
- détecter un ordre de détour (S52) associé à l'une au moins desdites une ou plusieurs instructions ultérieures de changement de direction ;
- déterminer un itinéraire de détour (S62) évitant ladite au moins une instruction ultérieure de changement de direction ;
- générer une ou plusieurs instructions ultérieures de changement de direction de détour (S64) ; et
- remplacer lesdites une ou plusieurs instructions ultérieures de changement de direction affichées par lesdites une ou plusieurs instructions ultérieures de changement de direction de détour (S90).

14. Procédé selon la revendication 13, comprenant en outre les étapes consistant à :
- mesurer un temps écoulé après affichage de l'instruction suivante de changement de direction et desdites une ou plusieurs instructions ultérieures de changement de direction de détour ;
- déterminer si le temps écoulé est supérieur à une valeur prédéterminée ; et
- ne plus afficher lesdites une ou plusieurs instructions ultérieures de changement de direction de détour si le temps écoulé est supérieur à la valeur prédéterminée.

15. Procédé selon la revendication 13, comprenant en outre les étapes consistant à :
- détecter une entrée tactile ; et
- ne plus afficher lesdites une ou plusieurs instructions ultérieures de changement de direction de détour lors de la détection de l'entrée tactile.
